# EUROPEAN PATENT SPECIFICATION

(11) **EP 4 186 039 B1**
(45) Date of publication and mention of the grant of the patent: **08.07.2026**
(21) Application number: 21748820.4
(22) Date of filing: 20.07.2021
(51) Int. Cl.: G08C 17/02, G07C 9/00, H04M 1/72415

(54) **METHOD AND SYSTEM FOR CONTROLLING ACCESS IN RADIO-CONTROLLED OPENING DEVICES**
VERFAHREN UND SYSTEM ZUR ZUGANGSKONTROLLE BEI FUNKGESTEUERTEN ÖFFNUNGSVORRICHTUNGEN
PROCÉDÉ ET SYSTÈME DE COMMANDE D'ACCÈS DANS DES DISPOSITIFS D'OUVERTURE RADIOCOMMANDÉS

(30) Priority: 22.07.2020 IT 202000017779
(43) Date of publication of application: 31.05.2023
(73) Proprietor: Germani, Giacomo, 20090 Buccinasco (MI) (IT)
(72) Inventor: Germani, Giacomo, 20090 Buccinasco (MI) (IT)
(74) Representative: Petruzziello, Aldo
(86) International application number: PCT/EP2021/070232
(87) International publication number: WO 2022/018067

(56) References cited:
- EP-A1- 3 375 751
- US-A1- 2012 295 662
- US-A1- 2017 053 470
- US-A1- 2018 012 483

## Description

The present invention relates to a method and a system for remotely controlling and managing access to areas provided with an automatic opening device actuated through the receiving of a radio signal emitted by a remote control.

### Background of the invention

The scarcity of parking spaces in urban areas is the source of many inconveniences such as the waste of time in order to find a parking space close to your destination, pollution and increased traffic during the search for a parking space and congestion of urban spaces when areas not destined for this purpose are used.

To reduce these inconveniences, it is desirable to increase the amount of usable parking spaces. Many homes have parking spaces such as garages or private parking spaces. These spaces are often only used by their owners for limited periods of time and remain empty when the owners use their own car. Therefore private parking spaces that remain unused by their owners for a few hours in the day or for several days constitute an unused resource.

The object of the present invention is to allow controlled access to this resource by users looking for parking, provided with an interface device with a long-range communication network and a short-range communication system, for example a smartphone with a Bluetooth communication system, and a particular remote control.

Often in order to gain access to a private garage it is necessary to overcome two barriers, a common entrance gate and an access door to the private garage.

Currently various locks are available on the market that can be controlled via a smartphone, so access to the private garage can be achieved by installing one of these devices.

Access to the entrance gate is instead more complicated. Although in this case too there are control units that allow communication via Wi-Fi or Bluetooth, to make the entrance gate accessible it is necessary to replace the control unit or add an external module that must be installed in a common area of the apartment building.

On the other hand, the present invention does not require changes to the instrumentation installed for the opening of the gate and can be applied to all remote-controlled gates with radio signals whose frequencies are in the ranges established by the implementation of the invention.

For example, in Italy the opening of automatic gates is often controlled through the sending of a digital radio signal at the frequency of 868MHz or 434MHz. This signal can be always the same or vary according to a pre-established algorithm common between the transmitter and the receiver, for example the KeeLoq algorithm. In the case of a variable signal, recognition of the remote control occurs in that the signal emitted is equal to that expected by the receiver but different from those previously emitted by the remote control.

The common feature of these instruments is that the communication between the receiver and its specific remote control is one-way, therefore all the information needed to open the gate is contained in the radio signal emitted by the remote control.

None of the known devices can be effectively used to control and manage access to areas fitted with a radio-controlled opening device belonging to different owners, without changing the automatic opening device of the property.

US2008/0171579A1 describes a cellular phone that also incorporates the functions of a programmable remote control able to reproduce a signal it has previously recorded. The phone described can record various signals and can replace remote controls used to control various electronic devices belonging to a single user. No database is described in which the signals of remote controls of different owners can be recorded, and no consideration is given to the fact that many remote controls are of the variable code type so that the signal recorded and used can no longer be reused. The device described therefore cannot be used to control and manage access to areas equipped with an opening device belonging to different owners.

US10360363B1 describes a controlled access system which in some particular implementations can provide controlled access that requires the installation of a particular system of control of access to this property.

US 2018/012483 A1 describes a system for cloning codes from a remote control of a garage door. A user remote control receives a code from another remote control, which can open the garage door, the user remote control transmits the code to a communication network via a user mobile device to store it. Another user requests the code from the communication network via another user mobile device, receives it in another remote control, and opens the garage door with it.

The present invention does not modify the device for automatic opening of the registered properties allowing a reduction in costs and, in the case of an apartment building, allowing an individual apartment owner to use the service without requiring permission to modify the common automatic opening device.

### Brief description of the invention

The present invention may be used in a service which makes available private parking areas, the owners of which are willing to rent such areas for short periods to users seeking parking.

The object of the present invention is to allow controlled access to these areas to users seeking parking, equipped with an interface device with a long-range communication network and a short-range communication system, for example a smartphone with a Bluetooth communication system, and further equipped with a particular remote control. When registering in the service, the owner provides a specific remote control that opens the external gate of the property.

The signals emitted by the specific remote control are recorded through the recording system (1) and stored in the database (2).

When a user, who has the device (3) (cellular phone and specific application) and the universal remote control (4), requests the opening of the external gate of the registered property, the signal specifications specific to that opening are retrieved from the database (2) and sent via the communication system to the device (3) and from the latter through a specific software to the universal remote control (4) wherein another software activates the signal transmission according to the received specifications.

The signal emitted by the universal remote control (4) is identical on each occasion to that emitted by the specific remote control and therefore opens the outside gate.

The user can then proceed to the registered property and access it by opening the electronic lock (7) with a specific software by exploiting the short-range connection system of the device (3).

By means of this invention, it is possible to allow user access to any registered property without the need for the owner of that registered property and the user to exchange a physical object such as a specific remote control or key and without changing the instrumentation that regulates access to the common property.

In the present description the following terms have the meanings given below:
Owner: the person who makes available a private parking area such as a garage or parking space.

User: the person who wishes to park in the private parking area made available by the owner.

Registered property: the private parking area that can be accessed through the invention.

Universal remote control: the remote control provided to users of the service which is capable of emitting the signal to actuate the opening device of each registered property.

Specific remote control: understood to mean a remote control capable of actuating the device for opening of a specific registered property.

Variable code remote control refers to a remote control that varies the signal emitted at each opening.

Automatic opening device: refers to the barrier that regulates access to a private property, for example the courtyard of an apartment building, from a public property to which everyone has free access, for example a street. In order for the invention to be applicable without changes to the opening system, it is assumed that the opening of the gate is controlled through the receiving of a special radio signal which may be the same between successive accesses or vary.

Database:
the IT infrastructure that stores the data generated by the specific remote controls and recorded by the recording system. In addition, the database has access software that manages and controls access to the stored data.

Interface device:
an electronic device equipped with:
a long-range communication system that enables it to communicate with the database;
a communication system that enables it to communicate with the universal remote control
a two-way system of communication with the user, for example touch screen or screen and keyboard, microphone and loudspeaker, etc.

Recording system:
an automatic electronic system that is able to records the features necessary for reproducing the radio signals emitted by the specific remote controls.

Controlled access: the possibility of accessing a registered property if certain information coincides with the expected information. The information on which the control is performed is:
the identity of the user which is checked through a login procedure on the database (2) in which the user is asked for a specific password;
the time at which an access request is made, which must be within the time interval in which the registered property was booked by the user;

Finally, the user cannot access a registered property again if they have previously declared, through the software installed on the device (3), that their use of that registered property has ended. In this case, in order to access the property again they must repeat the booking procedure.

### Description of the drawings:

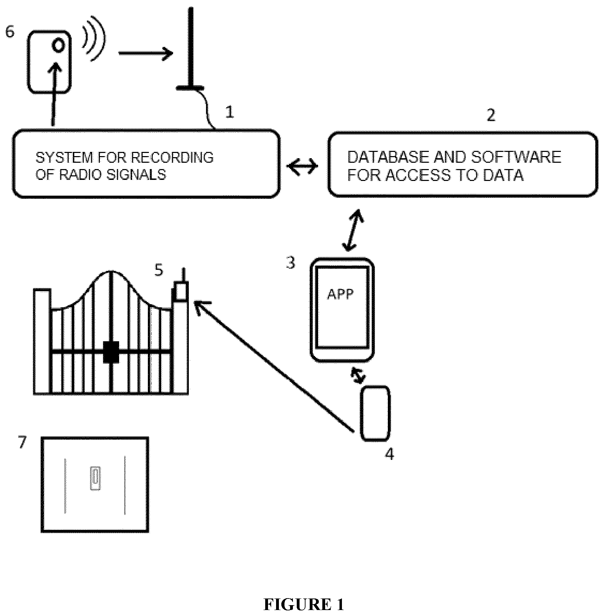

Figure 1 represents an access system comprising:
   a system of recording (1) of the radio signals emitted by the remote controls of each registered property;
   a database (2) that contains an ordered list of the signals emitted by the remote controls of the registered properties that can be accessed in a controlled manner through a special software;
   a device (3) of interface between a long-range communication network with which it is possible to send and receive data from the database (2) and a short-range network with which it is possible to communicate with the device (4), for example, the user's cellular phone which interfaces with the database via 4G communication and with the universal remote control via Bluetooth;
   a universal remote control (4), i.e. a multi-frequency transmitter controllable via the device (3);
   a device for automatic opening, for example the external gate of a registered property (5);
   the specific remote control of the registered property (6)
   an electronic garage lock (7) controllable via the device (3) with a specific software.

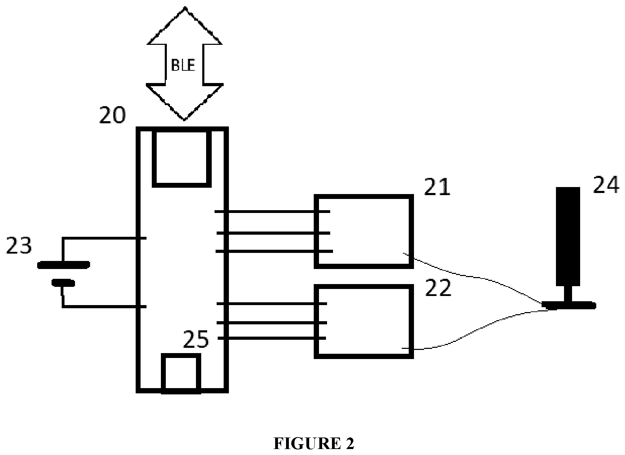

Figure 2 shows a particular embodiment of the universal remote control (4) in which an Arduino nano BLE module (20) powered by a battery (23) controls two radio transmitters RC-TASK-868 (21) and RC-TX1-434 (22); the generated signals are transmitted via the antenna (24).
   The universal remote control receives instructions on the particular signal to be transmitted on each occasion via its BLE connection to the user's cellular phone. A microUSB port (25) can be used to recharge the remote control or connect it directly to the cellular phone.

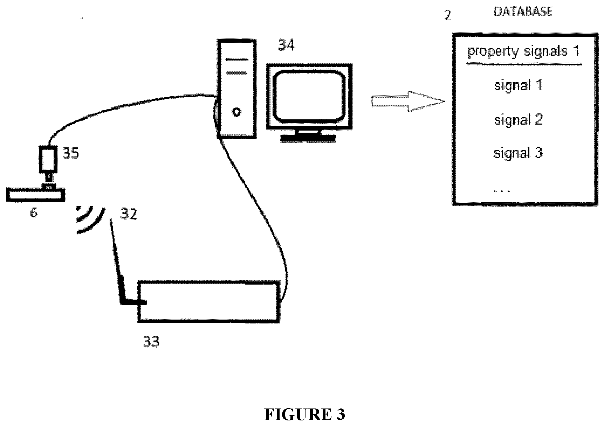

Figure 3: describes in detail the system of recording of the radio signals (1) emitted by a specific remote control (6) without any further hypotheses regarding the functioning of the specific remote control other than that when a particular button present on the remote control is pressed it emits a specific radio signal that actuates the opening of the external gate controlled by the remote control.
   The drawing describes how the button for triggering of the specific remote control can be pressed by an electronic actuator (35) controlled by a computer (34). The radio signal emitted is captured by a special antenna (32) and analysed by a software-defined radio (33) connected to and controlled by the computer (34) in such a way that when the remote control is actuated, the SDR records its radio signal which is stored by the computer in a folder dedicated to the particular property in the database (2).
Figure 4: represents a diagram that describes the functioning of many gate-opening remote controls; for remote controls that function in this way it is possible to simplify the functioning of the system of recording of the signals as described in Figure 5.
Figure 5 represents the recording system (1) which directly records the electrical signals generated by a specific remote control (6) whose functioning is described by Figure 4.

An electronically controlled switch is connected in parallel to the normal trigger switch of the remote control. In this way, the generation of the specific electrical signal of the remote control can be controlled by a computer via an interface board such as the Arduino UNO module.

The electrical signal generated by the remote control is recorded directly by the Arduino UNO board by intercepting with an electrical connection the signal of modulation of the oscillating circuit of the remote control.

### Detailed description of the invention

The subject of the present invention is a system for controlling access to an automatic opening device (5) according to claim 1.

A further example is the system as defined above in which the universal remote control (4) is incorporated in the interface device (3). In this embodiment, the interface device (3) is provided with a radio transmitter and with one or more suitable antennas that enable it to directly reproduce the signal emitted by any specific remote control (6) after receiving from the database (2) the data stored in said database (2).

More particularly, the specific remote control (6) can be of the fixed code or variable code type.

A further subject of the present invention is a method for remotely controlling and managing access to a property accessed by means of an automatic opening device (5) according to claim 4.

Preferably, the automatic opening device is the one that is pre-installed in the property and does not require modifications.

### Examples of embodiments of the invention

The present invention can be realised in various ways according to the features of the specific remote control.

An embodiment that does not require assumptions about the functioning of the specific remote control is shown in Figure 3:
The specific remote control (6) is placed in proximity of an antenna (32) suitable for capturing the frequency of the signals emitted by the remote control and connected to a receiver suitable for demodulating the signal emitted by the specific remote control, for example a software-defined radio SDR (33) such as HackRF One connected to a computer (34) can be used, the specific remote control and the receiving antenna can be placed inside a Faraday cage (not shown in the drawing) to minimise external electromagnetic disturbances. The specific remote control is actuated by a computer which electrically controls a piezoelectric (35), or other actuator, juxtaposed in such a way as to exert the same pressure on the remote control emission button as a user pressing the button with his finger. The SDR is connected to the same computer (34) and a specific program controls the actuator, records and stores the radio signals emitted at the specific frequency of the remote control and captured by the SDR when the remote control switch controlled by the computer is closed and the remote control therefore emits its signal.

The SDR can be set through its control software to capture signals at various frequencies, 1MHz-6GHz in the case of HackRF, and with different signal modulations.

The recording of the signals emitted by a remote control takes place serially and the signals are stored in the database (2) in order of emission by the specific remote control.

In the case of particular specific remote controls the recording operation can be simplified.

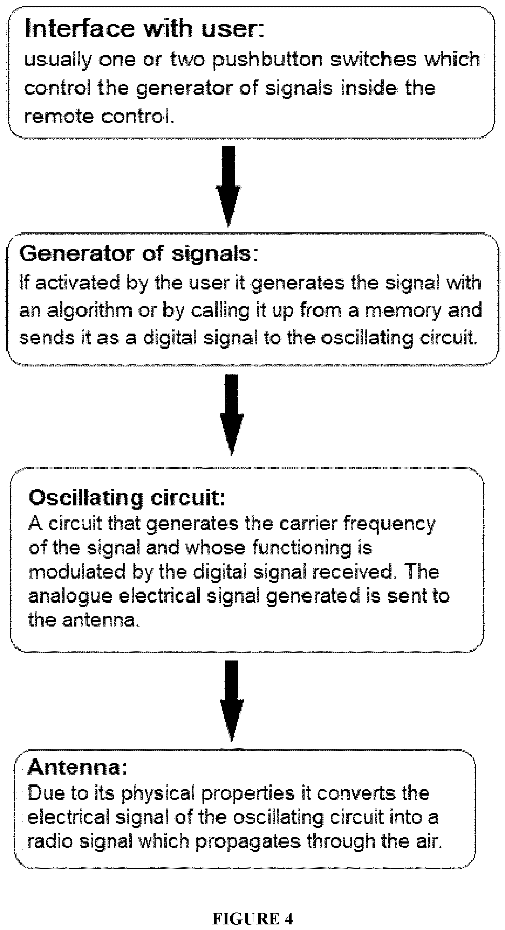

If a remote control has the functional structure shown in Figure 4, it is possible to replace the pushbutton on-off switch with a switch controlled electrically by an electronic board, for example Arduino UNO, so that it is not necessary to reproduce the pressure of a finger on the on-off button to actuate the remote control.

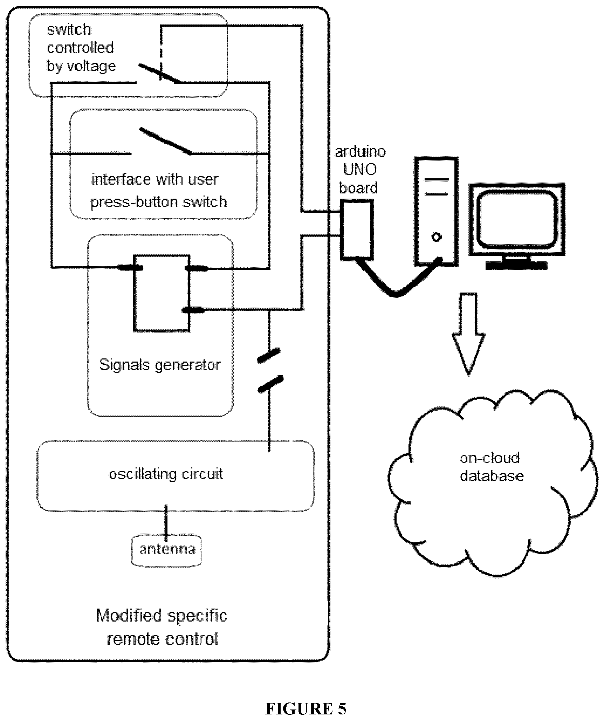

The output which from the internal microcontroller of the specific remote control controls the oscillating circuit can be connected to an input pin of the Arduino UNO board in such a way that the digital electrical signal of the remote control is received by the board, processed and sent, via a USB connection, to a computer that stores it in the database (2), in this way the storage of signals is free from electromagnetic interference. These modifications are illustrated in Figure 5.

In general, after a signal is used by a user to actuate the opening device of a registered property that signal can no longer be used and can be deleted from the database. The database never runs out of valid signals to send to users because the procedure of acquiring a new signal from the specific remote control is fast, less than one second per signal, compared to the consumption of signals by users which can be a few tens of signals per day for a specific property. Therefore the database control software can request the recording of new signals from the recording system (1) if necessary.

In the case of a fixed code remote control a single acquisition of the emitted signal via a receiver module at the appropriate frequency would be sufficient to guarantee accessibility.

In the case wherein the manufacturer of the specific remote control provides details of the algorithm which it uses to generate the specific signals, it is sufficient to upload the algorithm to the database so that it can generate the required signals directly.

As a database, Firestore can be used that allows storing and accessing of documents saved in specific directories on a cloud so that they are not only present on a specific server. This makes the service resistant to any failure of a server that makes up the database.

In this implementation the interface device (3) is the user's cellular phone which can interface with the database (2) via the communication network it uses to access the internet and with the universal remote control (4) through the BLE communication protocol. Access to the database and communication with the universal remote control are managed by a special application installed on the user's smartphone.

The universal remote control (4) can be realised as described in Figure 2 in which an Arduino Nano 33 BLE board (20) is connected to two transmitter modules at frequencies of 868MHz and 434MHz (21, 22) for example RC-TASK-868 and RC-TX1-434. The transmitters are connected to the respective antennas or to a single antenna (24) if the frequencies at which they operate allow it.

The Arduino board and the transmitters are powered by a suitable energy source, for example a lithium battery (23).

An appropriate control software is loaded on the Arduino Nano 33 BLE board during the assembly of the device. The software allows control of the Bluetooth transceiver inside the board, to process the signal specifications received via the BLE from the cellular phone and to activate the transmitter necessary to correctly reproduce the signal.

A sensor on the battery charge status allows the user to be warned through the application installed on their cellular phone if it is necessary to recharge the universal remote control by connecting it to the cellular phone or to an external energy source via a microUSB port (25).

In this embodiment, due to the specific choice of transmission modules, the remote control can reproduce radio signals at the frequencies of 868MHz and 434MHz with ASK signal amplitude modulation. However, if the equipment that controls the opening devices is located in geographic areas in which different frequencies or with different signal modulations, for example FSK frequency modulation, are used, it is possible to apply the same invention shown here by replacing the transmitter modules so that they can interface with the pre-existing opening devices of the properties that are to be registered in that specific geographic area.

## Claims

1. A system for remotely controlling and managing access to areas or registered properties provided with an automatic opening device (5) which is actuated through the receiving of a radio signal emitted by a specific remote control (6) provided by an owner, wherein the access to said areas or private properties is made available by said owner to a user, said system comprising: an automatic recording system (1) connected to said specific opening remote control (6) and designed for recording the signal emitted by the specific remote control (6); a database (2) connected to the recording system (1) for storing data obtained by means of the recording system (1) connected to the specific opening remote control (6), said database (2) containing an ordered list of signals emitted by the specific remote control (1) and serially recorded by the recording system (1) that can be accessed in a controlled manner; a universal remote control (4) provided to the user; a user's interface device (3) connected to the database (2) and to the universal remote control (4); wherein said interface device (3) is capable of requesting and receiving the data stored in said database (2) and communicating them to said universal remote control (4), wherein said universal remote control (4) is capable of reproducing the radio signal emitted by the specific remote control (6) after having received from the interface device (3) the data stored in the database (2) **characterized in that** said recording system (1) is electrically connected to the specific remote control (6) and it comprises a computer electrically connected to the specific remote control (6) with a first and a second electrical connection wherein the first electrical connection enables the computer to trigger the specific remote control (6) so that it produces the electrical signals containing the information necessary for producing the radio signals capable of actuating the automatic opening device (5), and a second electrical connection that enables the electrical signals emitted by the specific remote control (6) to be transmitted to the computer and wherein said signals or the information necessary for producing said signals are recorded by the computer and stored in the database (2) or **characterized in that** said recording system (1) is not electrically connected to the specific remote control (6) and it is made up of a computer, an electronic actuator (35) controlled by the computer, positioned on the specific remote control (6) and a receiver connected to the computer (33) provided with an antenna capable of receiving the radio signals emitted by the specific remote control (6), wherein said electronic actuator actuated by the computer triggers the specific remote control (6) so that it emits the radio signals capable of actuating the automatic opening device (5), and wherein said radio signals are captured by the antenna connected to the receiver which transmits the signals to the computer which records them and stores the information in the database (2).

2. System according to claim 1 wherein the universal remote control (4) is incorporated in the interface device (3), wherein the interface device (3) is provided with a radio transmitter and with one or more suitable antennas that enable it to directly reproduce the signal emitted by any specific remote control (6) after receiving from the database (2) the data stored in said database (2).

3. System according to each of the preceding claims wherein the specific remote control (6) is of the variable code type.

4. A method of remotely controlling and managing access to areas or registered properties provided with an automatic opening device (5) which is actuated through the receiving of a radio signal emitted by a specific remote control (6) provided by an owner, wherein the access to said areas or private properties is made available by the owner to a user provided with a universal remote control (4), comprising the steps of:
(i) serially recording the signals emitted by the specific opening remote control (6) for actuating the automatic opening device (5) via an automatic recording system (1) connected to the specific remote control (6) and storing an ordered list of the recorded signals in a database (2), to which the automatic recording system (1) is connected, wherein said recording system (1) is electrically connected to the specific remote control (6) and it comprises a computer electrically connected to the specific remote control (6) with a first and a second electrical connection wherein the first electrical connection enables the computer to trigger the specific remote control (6) so that it produces the electrical signals containing the information necessary for producing the radio signals capable of actuating the automatic opening device (5), and a second electrical connection that enables the electrical signals emitted by the specific remote control (6) to be transmitted to the computer and wherein said signals or the information necessary for producing said signals are recorded by the computer and stored in the database (2), or wherein said recording system (1) is not electrically connected to the specific remote control (6) and it is made up of a computer, an
electronic actuator (35) controlled by the computer, positioned on the specific remote control (6) and a receiver connected to the computer (33) provided with an antenna capable of receiving the radio signals emitted by the specific remote control (6), wherein said electronic actuator actuated by the computer triggers the specific remote control (6) so that it emits the radio signals capable of actuating the automatic opening device (5), and wherein said radio signals are captured by the antenna connected to the receiver which transmits the signals to the computer which records them and stores the information in the database (2);
(ii) requesting through a user's interface device (3) to retrieve from the database (2) the signal for actuating the automatic opening device (5);
(iii) via the interface device (3), sending from the database (2) to the user's universal remote control (4) the information necessary for reproducing the signal for actuating the automatic opening device (5); such that
(iv) the user actuates the universal remote control (4) to gain access in the automatic opening device (5).

## Patentansprüche

1. System zur Fernsteuerung und Verwaltung des Zugangs zu Bereichen oder registrierten Immobilien, die mit einer automatischen Öffnungsvorrichtung (5) versehen sind, die durch das Empfangen eines Funksignals betätigt wird, das von einer spezifischen, von einem Eigentümer bereitgestellten Fernbedienung (6) ausgesendet wird,
wobei der Zugang zu den Bereichen oder Privatimmobilien von dem Eigentümer einem Benutzer zur Verfügung gestellt wird, wobei das System Folgendes umfasst: ein automatisches Aufzeichnungssystem (1), das mit der spezifischen Öffnungsfernbedienung (6) verbunden und ausgestaltet ist, um das von der spezifischen Fernbedienung (6) ausgesendete Signal aufzuzeichnen; eine Datenbank (2), die mit dem Aufzeichnungssystem (1) verbunden ist, um mittels des mit der spezifischen Öffnungsfernbedienung (6) verbundenen Aufzeichnungssystems (1) erhaltene Daten zu speichern, wobei die Datenbank (2) eine geordnete Liste von von der spezifischen Fernbedienung (1) ausgesendeten und seriell von dem Aufzeichnungssystem (1) aufgezeichnete Signalen enthält, auf die auf kontrollierte Weise zugegriffen werden kann; eine Universalfernbedienung (4), die dem Benutzer bereitgestellt ist; eine Benutzerschnittstellenvorrichtung (3), die mit der Datenbank (2) und der Universalfernbedienung (4) verbunden ist, wobei die Schnittstellenvorrichtung (3) in der Lage ist, die in der Datenbank (2) gespeicherten Daten anzufordern und zu empfangen und an die Universalfernbedienung (4) zu übermitteln, wobei die Universalfernbedienung (4) in der Lage ist, das von der spezifischen Fernbedienung (6) ausgesendete Funksignal wiederzugeben, nachdem sie die in der Datenbank (2) gespeicherten Daten von der Schnittstellenvorrichtung (3) erhalten hat, **dadurch gekennzeichnet, dass** das Aufzeichnungssystem (1) elektrisch mit der spezifischen Fernbedienung (6) verbunden ist und einen Computer umfasst, der elektrisch mit der spezifischen Fernbedienung (6) mit einer ersten und einer zweiten elektrischen Verbindung verbunden ist, wobei die erste elektrische Verbindung dem Computer ermöglicht, die spezifische Fernbedienung (6) auszulösen, sodass sie die elektrischen Signale erzeugt, die die Informationen enthalten, die notwendig sind, um das Funksignal zu erzeugen, das in der Lage ist, die automatische Öffnungsvorrichtung (5) zu betätigen, und eine zweite elektrische Verbindung, die ermöglicht, dass die von der spezifischen Fernbedienung (6) ausgesendeten elektrischen Signale an den Computer übertragen werden, und wobei die Signale oder die Informationen, die notwendig sind, um die Signale zu erzeugen, von dem Computer aufgezeichnet und in der Datenbank (2) gespeichert werden, oder **dadurch gekennzeichnet, dass** das Aufzeichnungssystem (1) nicht elektrisch mit der spezifischen Fernbedienung (6) verbunden ist und aus einem Computer, einem elektrischen Aktor (35), der von dem Computer gesteuert wird, auf der spezifischen Fernbedingung (6) positioniert ist, und einem Empfänger besteht, der mit dem Computer (33) verbunden und mit einer Antenne versehen ist, die in der Lage ist, von der spezifischen Fernbedienung (6) ausgesendete Funksignale zu empfangen, wobei der von dem Computer betätigte elektrische Aktor die spezifische Fernbedienung (6) auslöst, sodass sie die Funksignale aussendet, die in der Lage sind, die automatische Öffnungsvorrichtung (5) zu betätigen, und wobei die Funksignale von der Antenne erfasst werden, die mit dem Empfänger verbunden ist, der die Signale an den Computer überträgt, der diese aufzeichnet und die Informationen in der Datenbank (2) speichert.

2. System nach Anspruch 1, bei dem die Universalfernbedienung (4) in die Schnittstellenvorrichtung (3) integriert ist, wobei die Schnittstellenvorrichtung (3) mit einem Funksender und mit einer oder mehreren geeigneten Antennen versehen ist, die es ihr ermöglichen, das von einer spezifischen Fernbedienung (6) ausgesendete Signal direkt wiederzugeben, nachdem sie die in der Datenbank (2) gespeicherten Daten von der Datenbank (2) empfangen hat.

3. System nach einem der vorhergehenden Ansprüche, wobei die spezifische Fernbedienung (6) vom Typ mit variablem Code ist.

4. Verfahren zur Fernsteuerung und Verwaltung des Zugangs zu Bereichen oder registrierten Immobilien, die mit einer automatischen Öffnungsvorrichtung (5) versehen sind, die durch das Empfangen eines Funksignals betätigt wird, das von einer spezifischen, von einem Eigentümer bereitgestellten Fernbedienung (6) ausgesendet wird,
wobei der Zugang zu den Bereichen oder Privatimmobilien durch den Eigentümer einem mit einer Universalfernbedienung (4) versehenen Benutzer zur Verfügung gestellt wird, umfassend die folgenden Schritte:
(i) serielles Aufzeichnen der von der spezifischen Öffnungsfernbedienung (6) zum Betätigen der automatischen Öffnungsvorrichtung (5) ausgesendeten Signale über ein automatisches Aufzeichnungssystem (1), das mit der spezifischen Fernbedienung (6) verbunden ist, und Speichern einer geordneten Liste der aufgezeichneten Signale in einer Datenbank (2), mit der das automatische Aufzeichnungssystem (1) verbunden ist, wobei das Aufzeichnungssystem (1) elektrisch mit der spezifischen Fernbedienung (6) verbunden ist und einen Computer umfasst, der elektrisch mit der spezifischen Fernbedienung (6) mit einer ersten und einer zweiten elektrischen Verbindung verbunden ist, wobei die erste elektrische Verbindung dem Computer ermöglicht, die spezifische Fernbedienung (6) auszulösen, sodass sie die elektrischen Signale erzeugt, die die Informationen enthalten, die notwendig sind, um das Funksignal zu erzeugen, das in der Lage ist, die automatische Öffnungsvorrichtung (5) zu betätigen, und eine zweite elektrische Verbindung, die ermöglicht, dass die von der spezifischen Fernbedienung (6) ausgesendeten elektrischen Signale an den Computer übertragen werden, und wobei die Signale oder die Informationen, die notwendig sind, um die Signale zu erzeugen, von dem Computer aufgezeichnet und in der Datenbank (2) gespeichert werden, oder wobei das Aufzeichnungssystem (1) nicht elektrisch mit der spezifischen Fernbedienung (6) verbunden ist und aus einem Computer, einem elektrischen Aktor (35), der von dem Computer gesteuert wird, auf der spezifischen Fernbedingung (6) positioniert ist, und einem Empfänger besteht, der mit dem Computer (33) verbunden und mit einer Antenne versehen ist, die in der Lage ist, von der spezifischen Fernbedienung (6) ausgesendete Funksignale zu empfangen, wobei der von dem Computer betätigte elektrische Aktor die spezifische Fernbedienung (6) auslöst, sodass sie die Funksignale aussendet, die in der Lage sind, die automatische Öffnungsvorrichtung (5) zu betätigen, und wobei die Funksignale von der Antenne erfasst werden, die mit dem Empfänger verbunden ist, der die Signale an den Computer überträgt, der diese aufzeichnet und die Informationen in der Datenbank (2) speichert;
(ii) Auffordern zur Abfrage des Signals zum Betätigen der automatischen Öffnungsvorrichtung (5) aus der Datenbank (2) durch eine Benutzerschnittstellenvorrichtung (3);
(iii) Senden der zum Wiedergeben des Signals zum Betätigen der automatischen Öffnungsvorrichtung (5) notwendigen Informationen über die Schnittstellenvorrichtung (3) von der Datenbank (2) an die Universalfernbedienung (4), sodass
(iv) der Benutzer die Universalfernbedienung (4) betätigt, um Zugang in der automatischen Öffnungsvorrichtung (5) zu erhalten.

## Revendications

1. Système de commande et de gestion à distance de l'accès à des zones ou à des propriétés enregistrées dotées d'un dispositif d'ouverture automatique (5) qui est actionné par la réception d'un signal radio émis par une télécommande spécifique (6) fournie par un propriétaire,
l'accès auxdites zones ou propriétés privées étant mis à la disposition d'un utilisateur par ledit propriétaire, ledit système comprenant : un système d'enregistrement automatique (1) relié à ladite télécommande d'ouverture spécifique (6) et conçu pour enregistrer le signal émis par la télécommande spécifique (6) ; une base de données (2) reliée au système d'enregistrement (1) pour stocker les données obtenues au moyen du système d'enregistrement (1) relié à la télécommande d'ouverture spécifique (6), ladite base de données (2) contenant une liste ordonnée de signaux émis par la télécommande spécifique (1) et enregistrés en série par le système d'enregistrement (1) pouvant être accessible de manière commandée ; une télécommande universelle (4) fournie à l'utilisateur ; un dispositif d'interface (3) de l'utilisateur relié à la base de données (2) et à la télécommande universelle (4) ; ledit dispositif d'interface (3) étant capable de demander et de recevoir les données stockées dans ladite base de données (2) et de les communiquer à ladite télécommande universelle (4), ladite télécommande universelle (4) étant capable de reproduire le signal radio émis par la télécommande spécifique (6) après avoir reçu du dispositif d'interface (3) les données stockées dans la base de données (2), **caractérisé en ce que** ledit système d'enregistrement (1) est électriquement relié à la télécommande spécifique (6) et comprend un ordinateur électriquement relié à la télécommande spécifique (6) par une première et une seconde connexion électrique, la première connexion électrique permettant à l'ordinateur de déclencher la télécommande spécifique (6) afin qu'elle produise les signaux électriques contenant les informations nécessaires à la production des signaux radio capables d'actionner le dispositif d'ouverture automatique (5), et une seconde connexion électrique qui permet de transmettre à l'ordinateur les signaux électriques émis par la télécommande spécifique (6) et lesdits signaux ou les informations nécessaires à la production desdits signaux étant enregistrés par l'ordinateur et stockés dans la base de données (2) ou **caractérisé en ce que** ledit système d'enregistrement (1) n'est pas relié électriquement à la télécommande spécifique (6) et se compose d'un ordinateur, d'un actionneur électronique (35) commandé par l'ordinateur, positionné sur la télécommande spécifique (6), et d'un récepteur relié à l'ordinateur (33) pourvu d'une antenne capable de recevoir les signaux radio émis par la télécommande spécifique (6), ledit actionneur électronique, actionné par l'ordinateur, déclenchant la télécommande spécifique (6) de manière à ce qu'elle émette les signaux radio capables d'actionner le dispositif d'ouverture automatique (5), et lesdits signaux radio étant captés par l'antenne reliée au récepteur qui transmet les signaux à l'ordinateur qui les enregistre et stocke les informations dans la base de données (2).

2. Système selon la revendication 1, la télécommande universelle (4) étant incorporée dans le dispositif d'interface (3), le dispositif d'interface (3) étant doté d'un émetteur radio et d'une ou plusieurs antennes appropriées qui lui permettent de reproduire directement le signal émis par toute télécommande spécifique (6) après avoir reçu de la base de données (2) les données stockées dans ladite base de données (2).

3. Système selon chacune des revendications précédentes, la télécommande spécifique (6) étant du type à code variable.

4. Procédé de commande et de gestion à distance de l'accès à des zones ou à des propriétés enregistrées dotées d'un dispositif d'ouverture automatique (5) qui est actionné par la réception d'un signal radio émis par une télécommande spécifique (6) fournie par un propriétaire,
l'accès auxdites zones ou propriétés privées étant mis à disposition par le propriétaire à un utilisateur pourvu d'une télécommande universelle (4), comprenant les étapes suivantes :
(i) l'enregistrement en série des signaux émis par la télécommande d'ouverture spécifique (6) pour actionner le dispositif d'ouverture automatique (5) via un système d'enregistrement automatique (1) relié à la télécommande spécifique (6) et le stockage d'une liste ordonnée des signaux enregistrés dans une base de données (2), à laquelle le système d'enregistrement automatique (1) est relié, ledit système d'enregistrement (1) étant relié électriquement à la télécommande spécifique (6) et comprenant un ordinateur relié électriquement à la télécommande spécifique (6) par une première et une seconde connexion électrique, la première connexion électrique permettant à l'ordinateur de déclencher la télécommande spécifique (6) afin qu'elle produise les signaux électriques contenant les informations nécessaires à la production des signaux radio capables d'actionner le dispositif d'ouverture automatique (5), et une seconde connexion électrique qui permet de transmettre à l'ordinateur les signaux électriques émis par la télécommande spécifique (6) et lesdits signaux ou les informations nécessaires à la production desdits signaux étant enregistrés par l'ordinateur et stockés dans la base de données (2), ou ledit système d'enregistrement (1) n'étant pas relié électriquement à la télécommande spécifique (6) et se composant d'un ordinateur, d'un actionneur électronique (35) commandé par l'ordinateur, positionné sur la télécommande spécifique (6), et d'un récepteur relié à l'ordinateur (33) pourvu d'une antenne capable de recevoir les signaux radio émis par la télécommande spécifique (6), ledit actionneur électronique, actionné par l'ordinateur, déclenchant la télécommande spécifique (6) de manière à ce qu'elle émette les signaux radio capables d'actionner le dispositif d'ouverture automatique (5), et lesdits signaux radio étant captés par l'antenne reliée au récepteur qui transmet les signaux à l'ordinateur qui les enregistre et stocke les informations dans la base de données (2) ;
(ii) la demande à un dispositif d'interface (3) de l'utilisateur d'extraire de la base de données (2) le signal permettant d'actionner le dispositif d'ouverture automatique (5) ;
(iii) via le dispositif d'interface (3), l'envoi de la base de données (2) à la télécommande universelle (4) de l'utilisateur des informations nécessaires à la reproduction du signal d'actionnement du dispositif d'ouverture automatique (5), de telle sorte que
(iv) l'utilisateur actionne la télécommande universelle (4) pour obtenir l'accès au dispositif d'ouverture automatique (5).
